# EUROPEAN PATENT SPECIFICATION

(11) **EP 0 740 578 B1**
(45) Date of publication and mention of the grant of the patent: **14.06.2000**
(21) Application number: 95906278.7
(22) Date of filing: 16.01.1995
(51) Int. Cl.: B01D 57/00, B03C 1/24, B44D 7/00, C04B 41/00

(54) **A CONTACT FREE PROCEDURE FOR ION AND MOISTURE TRANSPORT IN POROUS MATERIALS PLUS APPARATUS FOR ACCOMPLISHING THE PROCEDURE**
BERÜHRUNGSLOSES VERFAHREN ZUM TRANSPORT VON IONEN UND FEUCHTIGKEIT IN PORÖSEN MATERIALIEN UND VORRICHTUNG ZU SEINER DURCHFÜHRUNG
METHODE SANS CONTACT DE TRANSPORT D'IONS ET D'HUMIDITE DANS DES MATERIAUX POREUXET APPAREIL REALISANT CETTE METHODE

(30) Priority: 17.01.1994 DK 6894
(43) Date of publication of application: 06.11.1996
(73) Proprietor: Koch, Martin, 2500 Valby (DK)
(72) Inventor: Koch, Martin, 2500 Valby (DK)
(74) Representative: Beetz & Partner Patentanwälte
(86) International application number: DK9500025
(87) International publication number: WO9519217

(56) References cited:
- WO-A-91/04102
- DE-C- 2 306 814
- US-A- 5 068 039

## Description

A contact free procedure for ion and moisture transport in porous materials plus apparatus for accomplishing the procedure.

The invention relates to a procedure of transport of ions and moisture in porous materials e.g. as a method for reducing the contents of salts by transport of salts in these materials.

### Known methods

The methods known at present for the treatment of ions and moisture in porous materials, for instance stone, sand etc are:
A. Electrophysical methods
   The known procedures are based on the utilization of electical fields and require direct contact with the material. (1)
B. Electrophysical procedures in connection with sucking material on the surface of the treated material. (2)
C. Watering methods
   The material must be dismounted first and hereafter immersed in liquid. (1)
D. Thermal methods
   Here the material is heated by el. cables or warm water pipes, which are installed on the material. (1)
E. High frequency methods
   Here the material is treated with electric fields of high frequency. The highfrequent electric fields are sent out through an antenna, which is installed in the material. (1)

Methods B,C,D and E also require direct contact with the material as method A.
(1) Technical periodical:
   Bautenschutz und Bausanierung 16 (1993), "Trockenlegungs- und
   Salzbekaempfungsmassnahmen an Mauerwerk", C.Arendt,Dr.Ing.
(2) Patent:
   Deutsches Patentamt, Auslegungsschrift 2306814, 12.2.1974, "Verfahren und Vorrichtung zur Entfernung eines Salzausschlages von rohen und gemalten Oberflaechen"

The invention relates to a procedure of transport of ions and moisture in porous materials using a moving magnetic field which penetrates these materials. The procedure is characterized in that the moving magnetic field is produced outside one side of the porous material to be treated using a coil system embedded in a magnetic material, penetrates completely through the material to be treated and is returned back through the material via a magnetic material placed on the opposite side of the material and directed by a moving magnetic field production apparatus using a multiphase coil system.
This application is neither known nor obvious in view of the known techniques.

The application at a moving magnetic field in order to transport ions on or in a wall is neither described in nor indicated in the state of the art.
The electrophysical procedures known at present for transport of ions and moisture in porous materials are all based on the utilization of electrical field effects. Therefore, electrodes have to be installed directly on, or in these porous materials.
The structure of the material, which is to be treated, is therefore very often changed or is in danger to be permanently damaged through the electric field method. The system electrodes used in these procedures are also exposed to corrosion attacks.

General background in connection with a contact free procedure for transport of ions and moisture in porous materials, plus apparatus for accomplishing the procedure.

Using the moving magnetic field procedure together with the corresponding equipment described, there is no need for any mechanical action on, nor any direct contact with the material being treated. The porous material, being treated, is in no way chemically attacked. The treatment can be applied extremely slowly and carefully. The method operates without direct contact also in inaccessible locations. The method is especially in connection with frequency convertors carried out very efficiently. In connection with frequency converters and integrated measuring coils on the passive side, this method can also be used to determine the magnetic material constant of the porous material.

Differences in comparison to systems already existing and the system discription.

The present procedure of transport of ions and treatment of moisture in porous materials utilizes a moving magnetic field, and is different from the other known methods indicated. Hence, the previously indicated advantages are achieved.

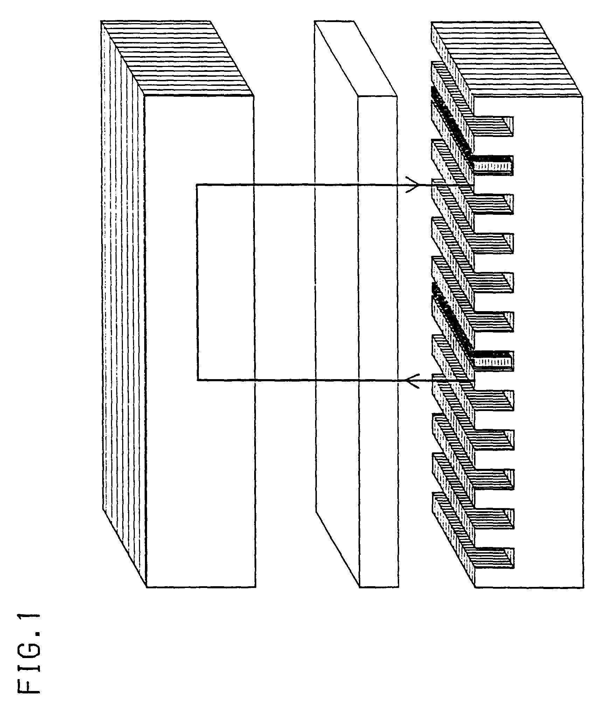

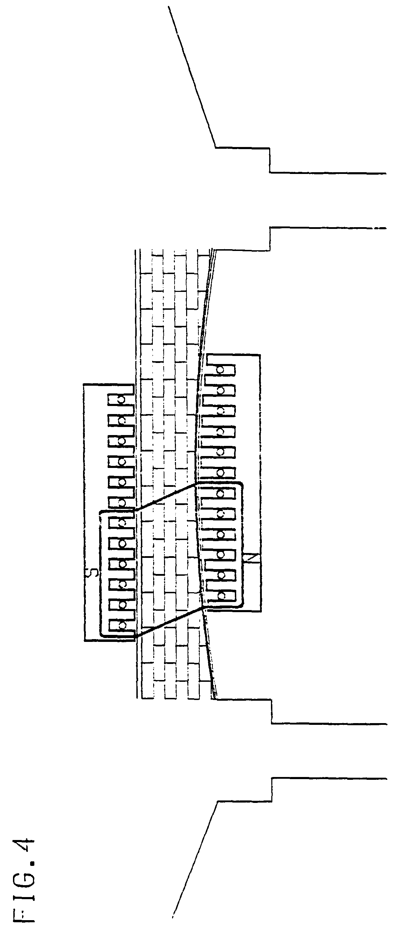

The moving magnetic field according to the invention is produced by an apparatus containing a multi phase coil system. Using an installation to return the moving magnetic field, it is possible to lead back the moving magnetic field on the other side of the material with small losses and thus the moving magnetic field is forced through the material. The multiphase coil system, which is necessary to produce the moving magnetic field, is preferably placed in a magnetical material by which a magnetic field concentration and amplification is achieved.
A magnetical return path, necessary for the magnetic field to return with a minimum of losses and to penetrate the porous material completely, can be made using magnetical material without windings, which is preferably assembled in such a manner, that hot spots due to eddy currents are avoided.
When the moving magnetic field passes through a porous material, all the magnetically non neutral parts in the porous material are affected by the field. The parts initially will move in the field's moving direction.
Because of additional accompanying processes, e.g. eddy currents in the porous material, an additional direction of movement of these mobile parts perpendicular to the field moving direction is obtained. It is possible in the porous material to either achieve or amplify this moving effect on these electrically not neutral particles in both perpendicular directions, by the use of two multiphase coil systems, which are embedded in magnetic materials and which are placed antiparallel and phase shifted against each other - which means, a north pole can see a south pole (Fig.4)- having the porous material therebetween.
An apparatus according to the invention for producing movement of ions and moisture in porous materials, comprising means for producing a magnetic field, which completely penetrates these materials, is characterized in that it contains a multiphase coil system embedded in a magnetic material for the production of a moving magnetic field outside one side of the porous material and a passive magnetic material positioned on the opposite side of the porous material for returning the magnetic field, which completely penetrates the porous materials. Because of the very often low magnetic material constants of the porous materials, it is given that the out and return path of the moving magnetic field in accordance with the invention consists of material having high magnetic material constants as opposed to the penetration way.
This apparatus according to the invention producing a moving magnetic field, contains preferably a multiphase coil system, which consists of, in relation to each other, shifted phases. This multiphase coil system is embedded in a magnetic material. The windings can e.g. be placed in a slotted, ferromagnetic, laminated core, wherein the laminations are insulated from each other.
In a preferred embodiment of the invention the total penetration of the porous material is achieved using a field return path having negligible losses. This magnetic return path, having low losses, may for instance be formed by a ferromagnetic core, where the single core plates are insulated from each other.
The core may have slots, which however is not mandatory.
In another preferred embodiment of the invention, the apparatus contains two multiphase coil systems, embedded in magnetic materials, which are phase shifted and antipolar to each other.
Provided that the porous material to be treated, is positioned between two active systems , for instance two ferromagnetic slotted cores having embedded identical coil systems, and if the coil systems are antipolar and the cores displaced to each other, it is rendered possible to either initiate or amplify an ion or moisture movement in both perpendicular directions to the field moving direction.
In another embodiment of the invention resistors or coils or transformers are connected between the supply network and the multiphase coil system. This enables an alternation of the moving magnetic fields amplitude.
In the apparatus according to the invention can be connected a frequency converter in between the supply network and the multiphase coil system. Especially in connection with restoration work it is advantageous to use a gentle treatment of the materials. With respect to the internal loss reduction (heating), it is highly desirable to be able to control or regulate the supply voltage and frequency of the field coils. This can for instance be achieved with the help of a frequency convertor, connected in between grid and the multiphase coil system. The invention is described more in detail with reference to the drawings Fig.1 to Fig.4.
Fig.1 shows schematicly an apparatus according to the invention for producing a moving magnetic field in the lower part of the drawing. A part of a coil of the multiphase coil system is indicated in a slotted core (shown in cross section). The moving magnetic field is indicated by the arrowed line. The moving magnetic field penetrates the porous material (the white section shown above the coil containing core) and is returned with minimum losses via the unslotted core in the upper part of the drawing. The moving magnetic field is penetrating the porous material once more on its way back to the slotted core.

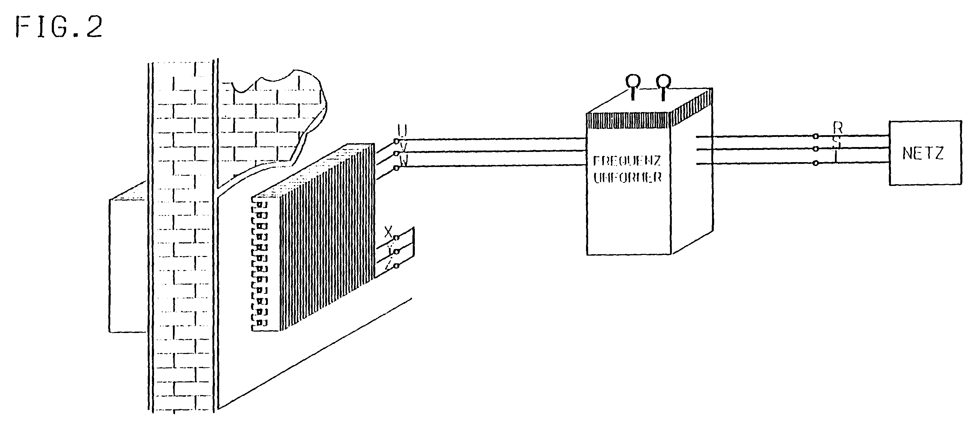

Fig.2 shows an apparatus according to the invention connected to a frequency converter in between the supplying network and a three phase coil system. The coil system is embedded in a slotted core. The slotted core is shown on the right hand side of a wall. The core on the left hand side of the wall is working as the low loss return path for the moving magnetic field.

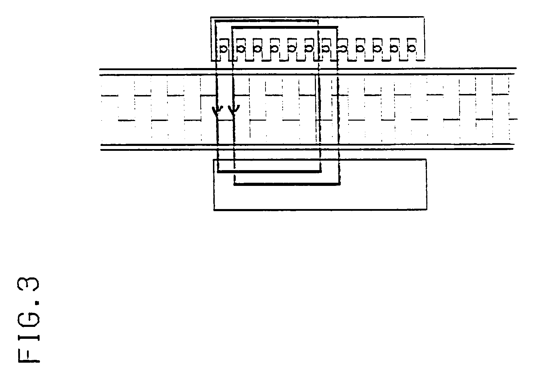

Fig.3 indicates symbolised with two field lines the magnetic field's passage through a wall, outgoing from the slotted core mounted on the right hand side of the wall. With a suitable phase sequence the magnetic field moves downwards from the top removing the moisture from this wall area. The unslotted core is the moving magnetic field's low loss return path.
Fig.4 shows some porous material, in this case a church arch, positioned between two slotted cores containing identical coil systems. The cores coil systems are antipolar to each other (symbolised with N=northpole and S=southpole).

The invention will be described more in detail through an example:
In Fig.4 a practical example of working the invention is shown. Some frescos on a salt contaminated plaster layer on the inner side of an arch are endangered due to the crystallization of salt. Using two frequency converter controlled, active systems, which are phase shifted to each other and of opposite polarity but with the moving magnetic field travelling in the same direction, the mobile salts underneath the frescos are transported to the upper surface of the arch. The apparatus according to the invention can always be designed to fit the shape of the material being treated and according to the requirements. It is possible, for each application, to determine the optimal supply voltage, frequency, number of windings etc. of the multiphase coil system.
In a laboratory experiment a two pole, three phase, shellack insulated low voltage winding with a wire diameter of 1 mm was used. Each coil had 120 windings. Nine slots were available for the windings and the number of slots per pole and phase was therefore 1.5. Phase voltage was 16.7 V, the measured current was 4 A, the active component of the current was 2.6 A. The active power was 130W.

## Claims

1. Procedure for the transportation of ions and moisture through porous materials using a moving magnetic field which penetrates these materials, characterized in that the moving magnetic field is produced outside one side of the porous material to be treated, using a coil system embedded in a magnetic material, penetrates completely through the material to be treated and is returned back through the material via a magnetic material placed on the opposite side of the material and directed by a moving magnetic field production apparatus using a multiphase coil system.

2. Procedure as claimed in claim 1,
characterized in that the moving magnetic field returns through a passive magnetic material, consisting of unslotted parts which are insulated from each other.

3. Procedure as claimed in claim 1,
characterized in the use of two multiphase coil systems both embedded in magnetic materials, wherein the two systems are used phase shifted and antipolar to each other and with the same moving direction of the magnetic field.

4. Apparatus for producing movement of ions and moisture in porous materials, comprising means for producing a magnetic field, which completely penetrates these materials, characterized in that it contains a multiphase coil system embedded in a magnetical material for the production of a moving magnetic field outside one side of the porous material and a passive magnetic material positioned on the opposite side of the porous material for returning the magnetic field.

5. Apparatus as claimed in claim 4,
characterized in that the return path of the moving magnetic field is through a passive magnetic material consisting of parts which are insulated from each other.

6. Apparatus as claimed in claim 4,
characterized in that it contains a multiphase coil system embedded in a magnetic material outside one side of the porous material and a second multiphase coil system embedded in a magnetic material on the opposite side of the porous material, wherein the two systems are placed phase shifted and antipolar against each other, and with the same direction of the moving magnetic field.

## Patentansprüche

1. Verfahren zum Transport von Ionen und Feuchtigkeit durch poröse Materialien unter Anwendung eines magnetischen Wanderfeldes, das diese Materialien durchdringt,
dadurch gekennzeichnet, daß
das magnetische Wanderfeld außerhalb einer Seite des zu behandelnden porösen Materials unter Verwendung eines in einen magnetischen Werkstoff eingebetteten Spulensystems erzeugt wird, das zu behandelnde Material vollständig durchdringt und über einen magnetischen Werkstoff, der an der gegenüberliegenden Seite des Materials angeordnet ist, durch das Material hindurch rückgeführt und durch eine Vorrichtung zur Erzeugung eines magnetischen Wanderfeldes unter Verwendung eines Mehrphasen-Spulensystems geführt wird.

2. Verfahren nach Anspruch 1, dadurch gekennzeichnet, daß das magnetische Wanderfeld durch einen passiven magnetischen Werkstoff, der aus voneinander isolierten Teilen ohne Nuten besteht, rückgeführt wird.

3. Verfahren nach Anspruch 1, gekennzeichnet durch Verwendung von zwei Mehrphasen-Spulensystemen, die beide in magnetischen Werkstoffen eingebettet sind und die phasenverschoben und antipolar zueinander bei gleicher Bewegungsrichtung des magnetischen Wanderfeldes verwendet werden.

4. Vorrichtung zur Erzielung einer Bewegung von Ionen und Feuchtigkeit in porösen Materialien, die eine Einrichtung zur Erzeugung eines Magnetfeldes aufweist, das diese Materialien vollständig durchdringt, dadurch gekennzeichnet, daß sie zur Erzeugung eines magnetischen Wanderfeldes außerhalb einer Seite des porösen Materials ein Mehrphasen-Spulensystem, das in einem magnetischen Werkstoff eingebettet ist, und zur Rückführung des Magnetfeldes einen passiven magnetischen Werkstoff aufweist, der auf der gegenüberliegenden Seite des porösen Materials angeordnet ist.

5. Vorrichtung nach Anspruch 4, dadurch gekennzeichnet, daß der Weg, auf dem das magnetische Wanderfeld rückgeführt wird, durch einen passiven magnetischen Werkstoff verläuft, der aus voneinander isolierten Teilen besteht.

6. Vorrichtung nach Anspruch 4, dadurch gekennzeichnet, daß sie ein Mehrphasen-Spulensystem, das in einem magnetischen Werkstoff eingebettet ist, außerhalb einer Seite des porösen Materials sowie ein zweites Mehrphasen-Spulensystem, das in einem magnetischen Material eingebettet ist, auf der gegenüberliegenden Seite des porösen Materials aufweist, wobei die beiden Spulensysteme phasenverschoben und antipolar zueinander mit gleicher Bewegungsrichtung des magnetischen Wanderfeldes angeordnet sind.

## Revendications

1. Méthode de transport d'ions et d'humidité à travers des matériaux poreux utilisant un champ magnétique progressif qui pénètre ces matériaux,
caractérisée en ce que le champ magnétique progressif est créé à l'extérieur d'un des côtés du matériau poreux à traiter en utilisant un système de bobines inséré dans un matériel magnétique, pénètre entièrement le matériau à traiter, et est renvoyé à travers le matériau via un matériel magnétique placé au côté opposé du matériau, et dirigé par un appareil produisant un champ magnétique progressif faisant usage d'un système polyphasé de bobines.

2. Méthode selon la revendication 1,
caractérisée en ce que le champ magnétique progressif est renvoyé à travers un matériau magnétique passif, composé de parties non-fendues qui sont isolées les unes aux autres.

3. Méthode selon la revendication 1,
caractérisée par l'utilisation de deux systèmes polyphasés de bobines, tous deux insérés dans des matériels magnétiques, les deux systèmes étant employés déphasés et antipolaires l'un à l'autre et dont le sens du mouvement du champ magnétique est le même.

4. Appareil de production de mouvement d'ions et d'humidité dans des matériaux poreux, comportant des moyens de production d'un champ magnétique qui pénètre complètement ces matériaux, caracterisé en ce qu'il comprend un système polyphasé de bobines inséré dans un matériel magnétique pour la production d'un champ magnétique progressif à l'extérieur d'un des côtés du matériau poreux et un matériel magnétique passif placé au côté opposé du matériau pour renvoyer le champ magnétique.

5. Appareil selon la revendication 4,
caractérisé en ce que la voie de retour du champ magnétique progressif passe à travers un matériel magnétique passif consistant de parties isolées les unes aux autres.

6. Appareil selon la revendication 4,
caractérisé en ce qu'il comprend un système polyphasé de bobines inséré dans un matériel magnétique à l'extérieur d'un des côtés du matériau poreux ainsi qu'un deuxième système polyphasé de bobines inséré dans un matériel magnétique au côté opposé du matériau poreux, les deux systèmes de bobines étant placés déphasés et antipolaires l'un à l'autre, le sens du mouvement du champ magnétique progressif étant le même.
